## Europäisches Patentamt

## European Patent Office

## Office européen des brevets

(19)

(11) Veröffentlichungsnummer: **0 061 676**
A2

(12) # EUROPÄISCHE PATENTANMELDUNG

(21) Anmeldenummer: 82102305.8

(22) Anmeldetag: 20.03.82

(51) Int. Cl.³: **H 04 N 7/08**
G 09 B 21/00

(30) Priorität: 28.03.81 DE 3112438

(43) Veröffentlichungstag der Anmeldung:
06.10.82 Patentblatt 82/40

(84) Benannte Vertragsstaaten:
AT GB NL SE

(71) Anmelder: Licentia Patent-Verwaltungs-GmbH
Theodor-Stern-Kai 1
D-6000 Frankfurt/Main 70(DE)

(72) Erfinder: Limmer, Lothar, Dipl.-Ing.
Pinnaubogen 73
D-2081 Appen(DE)

(72) Erfinder: Kolzenburg, Ulrich, Dipl.-Ing.
Osterholderstrasse 19
D-2081 Appen(DE)

(72) Erfinder: Green, Hartmut, Dipl.-Ing.
Rosentwiete 18
D-2082 Uetersen(DE)

(72) Erfinder: Marburg, Helmut, Ing. grad.
Croningstrasse 16
D-2000 Wedel(DE)

(72) Erfinder: Wellhausen, Lutz, Dipl.-Ing.
Egenbüttelweg 4
D-2000 Wedel(DE)

(74) Vertreter: Sass, Adolph, Dipl.-Ing. et al,
Licentia Patent-Verwaltungs-GmbH Theodor-Stern-Kai
1
D-6000 Frankfurt 70(DE)

(54) Gerät zur Wiedergabe von Videotextseiten oder von Videotext- und Bildschirmtextseiten.

(57) Gerät zur Wiedergabe von Videotextseiten oder von Videotext- und Bildschirmtextseiten unter Verwendung eines einen Videotext- bzw. Videotext-Bildschirmtext-Dekoder aufweisenden Empfangsbauteiles, insbesondere eines Fernsehgerätes. Der Dekoder weist einen Seitenspeicher und einen dem Seitenspeicher nachgeschalteten Zeichengenerator auf. Zum Seitenspeicher ist ein Pufferseitenspeicher logisch parallel geschaltet, der mit einem von einem Blinden bedienbaren Bedienpult zusammenwirkt. Das Bedienpult weist eine Ansteuerschaltungsanordnung, eine Braille-Zeile zur zeilenweisen Ausgabe der Textseiten und eine Bedienungstastatur zur Eingabe von Bedienungsfunktionen auf. Gegebenenfalls ist der Pufferseitenspeicher von dem Seitenspeicher abkoppelbar. Nach einem Abkoppelvorgang wird der von dem Seitenspeicher an den Pufferseitenspeicher gelieferte Textinhalt in den Seitenspeicher des Pufferseitenspeichers aufgenommen. Nach Aufnahme des Textinhaltes wird der Pufferseitenspeicher wieder parallel zum Seitenspeicher angekoppelt.

FIG.1

Bildschirm

Licentia Patent-Verwaltungs-GmbH          PTL.-HH/Sl/mar
Theodor-Stern-Kai 1                       HH-81/09
D-6000 Frankfurt 70

"Gerät zur Wiedergabe von Videotextseiten oder von Video-
text- und Bildschirmtextseiten"

Die Erfindung bezieht sich auf ein Gerät gemäß dem Wortlaut
des Oberbegriffes von Anspruch 1.

Es ist allgemein bekannt, auf dem Bildschirm eines Fernsehgerätes Videotext- oder Bildschirmtextseiten wiederzugeben,
wobei gerade in letzter Zeit in mehreren europäischen Ländern Bestrebungen im Gange sind, den Bildschirmtext in
größerem Umfang einzuführen. Um dieses zu verwirklichen, ist
es erforderlich, neu auf den Markt kommende Fernsehgeräte
mit einem Videotext- bzw. Videotext-Bildschirmtext-Dekoder
auszurüsten bzw. bereits vorhandene Fernsehgeräte mit einem
derartigen Dekoder nachzurüsten. Nachteilig ist allerdings,
daß die bisher vorhandenen Geräte nur für sehende Personen,
nicht jedoch für stark Sehbehinderte oder Blinde verwendet
werden können.

Der Erfindung liegt daher die Aufgabe zugrunde, ein Gerät
der eingangs genannten Art zu schaffen, mit dem es stark

- 2 -

Sehbehinderten oder Blinden ermöglicht wird, an dem
neuen Informationsmedium Bildschirmtext und/oder
Videotext teilhaben zu können.

Die Aufgabe wird erfindungsgemäß durch die kennzeichnenden Merkmale von Anspruch 1 gelöst.

Ausgestaltungen der Erfindung sind in den Unteransprüchen
2 bis 8 beschrieben.

Ein Vorteil der Erfindung ist darin zu sehen, daß mit
einem Videotext- bzw. Videotext-Bildschirmtext-Dekoder
ausgerüstete Fernsehgeräte ohne besondere Schwierigkeiten, d. h. ohne irgendwelche großen Veränderungen an in
den Fernsehgeräten vorhandenen Bauelementen umgerüstet
werden können. Ein weiterer Vorteil liegt darin, daß die
Informationswiedergabe auf dem Bildschirm eines Fernsehgerätes durch die Informations-Wiedergabe auf der
Braille-Zeile nicht gestört wird. Vorteilhaft ist es
auch, daß die Anwendung nicht auf Fernsehgeräte beschränkt
ist. Vielmehr können auch einen Videotext- bzw. Videotext-
Bildschirmtext-Dekoder aufweisende Empfangsbauteile, wie
z. B. Videorecorder verwendet werden.

In der Zeichnung ist ein Ausführungsbeispiel nach der
Erfindung dargestellt, und zwar zeigt:

Fig. 1 und 2 jeweils ein Blockschaltbild eines ein
Fernsehgerät verwendendes Gerätes,

Fig. 3 die Bedientastatur mit zugehörender Schaltungsanordnung des Bedienpultes,

Fig. 4 die Ansteuerschaltungsanordnung für die Braille-
zeile und

Fig. 5 das Schaltbild eines Pufferseitenspeichers
(Seitenspeicherinterface).

In dem Blockschaltbild sind in einem gestrichelt gezeichneten, ein Fernsehgerät 1 darstellenden Kasten die
Bauelemente eines Videotext- bzw. Videotext-Bildschirmtext-Dekoders dargestellt, der die Wiedergabe von Videotext bzw. Videotext und Bildschirmtext auf dem Bildschirm
des Fernsehgerätes 1 ermöglicht. Diese Bauelemente sind
ein Dekoder 2, ein dem Dekoder nachgeschalteter Seitenspeicher 3 und ein Zeichengenerator 4, der von dem Seitenspeicher 3 gespeist wird. Der Zeichengenerator 4 ist dem
zeichnerisch nicht dargestellten Bildschirm des Fernsehgerätes 1 vorgeschaltet. Um dieses Gerät 1 für die Benutzung durch stark Sehbehinderte oder Blinde umzurüsten,
ist dem Seitenspeicher 3 ein Pufferseitenspeicher 5 parallel geschaltet, der innerhalb des Fernsehgerätegehäuses
angeordnet werden kann. Der Pufferseitenspeicher 5 ist an
ein externes Bedienpult 6 angeschlossen, das eine Ansteuerschaltungsanordnung, eine Braille-Zeile zur zeilenweisen
Ausgabe der Textseiten und eine Bedientastatur zur Eingabe
von Bedienungsfunktionen aufweist. Bei der Braille-Zeile
kann es sich um eine solche mit 40 Stellen handeln. Aus
Sicherheitsgründen ist zwischen dem Pufferseitenspeicher 5
und dem Bedienpult 6 eine galvanische Trennung vorgesehen.

Im Bedienpult 6 ist ein Pufferspeicher angeordnet. Hierbei ist sichergestellt, daß die Wiedergabe auf dem Bildschirm durch die Informationswiedergabe auf der im Bedienpult 6 enthaltenen Braille-Zeile nicht gestört wird. Die
automatische Ausgabe von Informationen zur Benutzerführung
ermöglicht eine einfache Handhabung der Anlage. Beispielsweise wird nach dem Lesen der Bildschirmtext- bzw. Videotextseite die Meldung "bitte neue Seite anfordern" automatisch ausgegeben.

Über die Bedienungstastatur des Bedienpultes 6 kann eine
sehbehinderte oder blinde Person beispielsweise folgende

- 4 -

Bedienungsfunktionen dem Gerät eingeben:

1. Übernahme einer Seite auf den Bildschirm,
2. Ausgabe der vorhergehenden oder folgenden Textzeile
3. Nochmalige Wiedergabe einer Zeile,
4. Einstellung auf erste Zeile (Anfang der Seite),
5. Einstellung auf letzte Zeile (Ende der Seite),
6. Direkte Anwahl einer Zeile (Zeilen-Nummern eingeben),
7. Ausgabe der laufenden (gerade gelesenen) Zeilen-Nummer,
8. Wiedergabe eines Sonderzeichens für Leerstellen, d. h. für Stellen, die nicht darstellbare Zeichen enthalten (z.B. graphische Darstellungen).

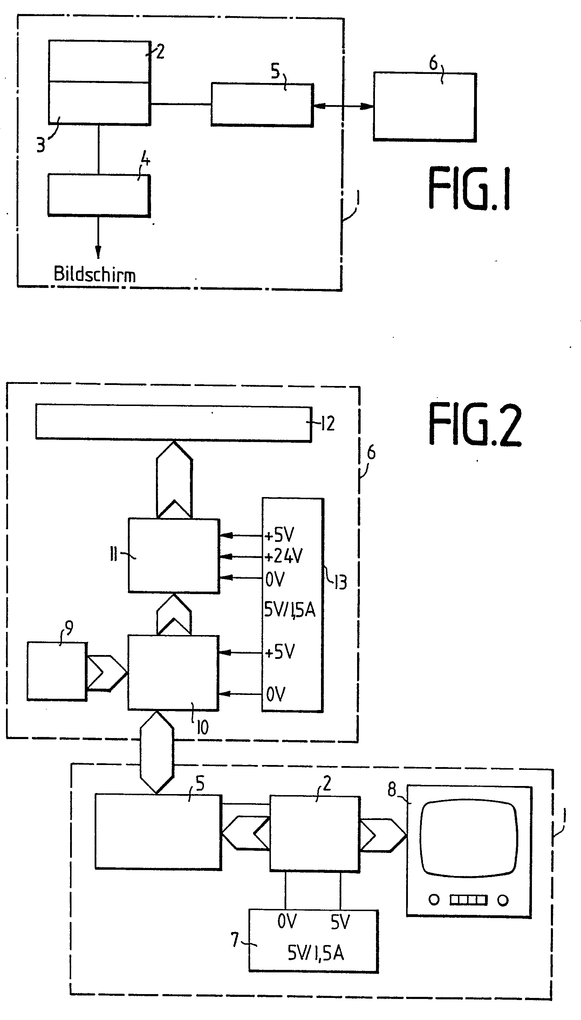

Bei dem in Figur 2 dargestellten Gerät sind für die einzelnen Bauelemente, die mit denen aus Figur 1 übereinstimmen, dieselben Bezugszeichen wie in Figur 1 verwendet worden. Der mit 2 bezeichnete Dekoder enthält auch die zeichnerisch nicht dargestellten Seitenspeicher und Zeichengenerator. Bei dem Dekoder kann es sich um einen Valvo-Video-Text-Dekoder der Firma Valvo/ Deutschland handeln, der ebenfalls in dem in Figur 1 dargestellten Gerät zur Anwendung kommen kann. Dieser Dekoder besteht im wesentlichen aus den vier LSI-Schaltungen
- SAA 5020 Taktsteuerung
- SAA 5030 Videoprozessor
- SAA 5041 Datenverarbeitungs- und Steuerschaltung
- SAA 5051 Zeichengenerator
sowie zwei Standard-Speicherschaltungen 2614 (statische 1 k x 4 - RAMs) für den Seitenspeicher. An den Dekoder ist ein allgemein bekanntes Netzschaltungsteil 7 angeschlossen. Der Monitor des Fernsehgerätes ist - im Gegensatz zu Figur 1 - zeichnerisch dargestellt und mit 8 bezeichnet. Durch den zeichnerisch besonders hervorgehobenen Monitor 7 wird auch
verdeutlicht, daß der Dekoder 2 mit zugehörendem Seitenspeicher 3, Zeichengenerator 4 und Netzteil 7 sowie der
Pufferseitenspeicher 5 jeweils als ein Zusatzgerät ausgeführt und als solche an bereits vorhandene Fernsehgeräte
angeschlossen werden können.

Das Bedienpult 6 weist eine Tastatur 9 zur Eingabe von
Bedienungsfunktionen, einen der Tastatur 9 nachgeordneten
Prozessor 10, und eine an dem Ausgang des Prozessors 10 angeschlossene Ansteuer-Schaltungsanordnung 11 auf, die eine
Braille-Zeile 12 ansteuert. Ein Netzgerät 13 bekannter Art
versorgt den Prozessor 10 und die Schaltungsanordnung 11
mit der benötigten elektrischen Energie.

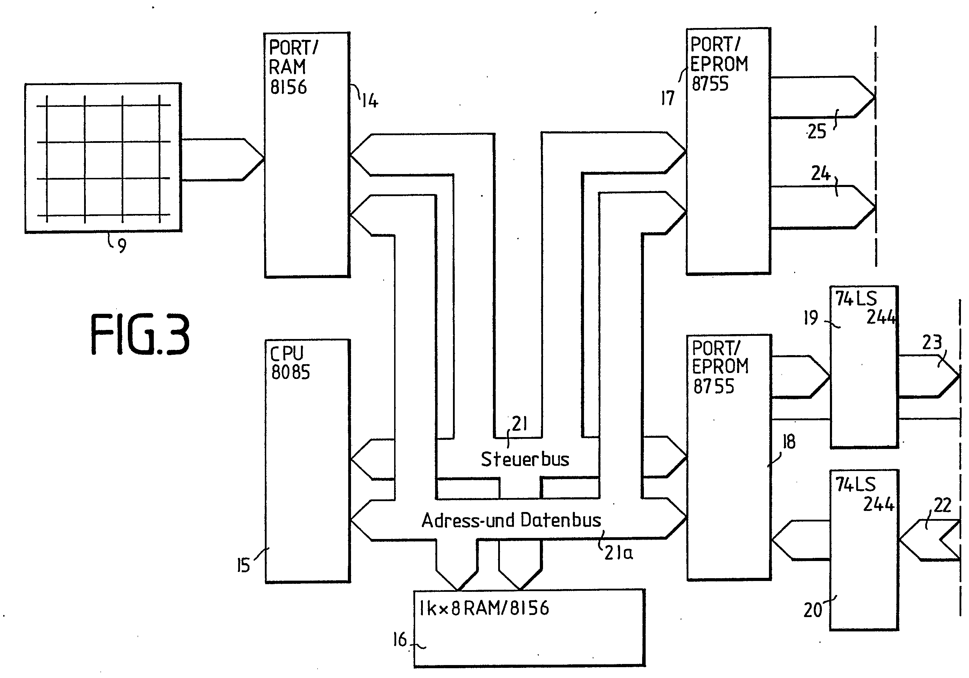

Einzelheiten der Schaltungsanordnung, die der Bedientastatur
9 des Bedienpultes 6 nachgeordnet ist, sind in Figur 3 dargestellt. Die Schaltungsanordnung besteht im wesentlichen
aus dem PORT/RAM-Baustein 14, der Prozessoreinheit 15, dem
RAM-Baustein 16, den PORT/EPROM-Bausteinen 17 und 18 sowie
den Bausteinen 19 und 20 und zugehörenden Steuer-, Adress-
und Datensammelschienen 21 und 21a. Das Programm für die
Prozessoreinheit 15 wird in den Kombi-Bausteinen 17 und
18 abgespeichert. Die von dem in den Figuren 1 und 2 mit
5 bezeichneten Pufferseitenspeicher, der in Figur 5 ausführlich dargestellt ist und an dem Eingang 22 des Bausteines 20 und dem Ausgang 23 des Bausteines 19 angeschlossen ist, übernommenen Daten werden in dem Baustein 16 abgelegt. Gesteuert wird die Schaltungsanordnung über die Bedientastatur 9, mit der beispielsweise folgende Funktionen ausgelöst werden:

1. Seite einlesen und mit erster Zeile ausgeben,
2. Zeile vorwärts ausgeben,

3. Zeile rückwärts ausgeben,

4. gleiche Zeile nochmals ausgeben,

5. auf Zeile 24 springen und

6. auf Zeile 1 springen.

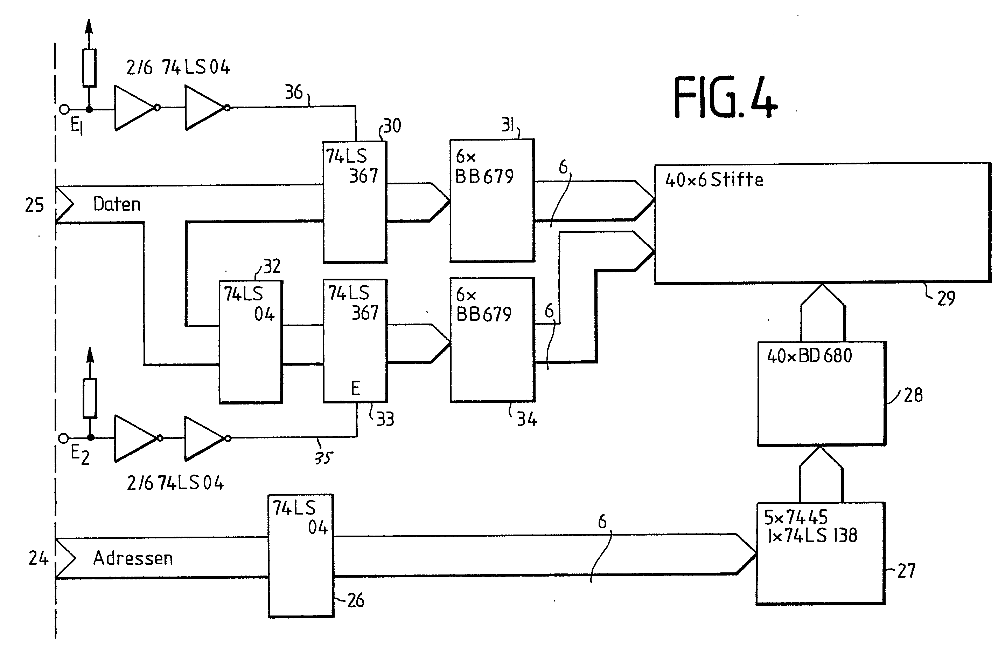

Die Prozessoreinheit 15 steuert dann mittels Programm über den Baustein 17 mit zugehörenden Ausgängen 24 und 25 die in Figur 4 dargestellte Ansteuerschaltungsanordnung für die Braille-Zeile an. Über den Kombi-Baustein 18 und den Baustein 19 werden mit Hilfe des Ausganges 23 Adress-, Select- und Clocksignale an den Pufferspeicher 5 (in Figur 5 dargestellt) ausgegeben und über den Baustein 20 mit zugehörendem Eingang 22 der Inhalt des Seitenspeichers eingelesen.

Die Ansteuerschaltungsanordnung aus Figur 4 weist einen Baustein 26 auf, dessen Eingang an dem Ausgang 24 des Bausteines 17 aus Figur 3 angeschlossen ist und dem eine Multiplexschaltungsanordnung 27 und eine Einrichtung zur Modulauswahl 28 nachgeschaltet sind. Diese Bauelemente dienen dazu, die Module der Braille-Zeile 29 auszuwählen. Die Braille-Zeile 29 weist vierzig Module auf, die jeweils für sechs Stifte vorgesehen sind. Bei der Auswahl der Module dient der Baustein 26 als Treiber zur Entkopplung der Multiplexschaltungsanordnung 27, die z. B. aus in der Zeichnung angegebenem Baustein 74 LS 138 und fünf Bausteinen 7445 bestehen kann. Jeweils ein Baustein 7445 ist für die Auswahl von je acht Modulen zuständig. Die Ausgänge der Bausteine 7445, die von dem Baustein 74 LS 138 in Betrieb gesetzt werden, steuern beispielsweise vierzig PNP-Darlington-Schaltungsanordnungen BD 680 in der Einrichtung zur Modulauswahl 28 an, durch die die Spulen der Taststifte der Braillezeile 29 mit elektrischer Energie versorgt werden.

Die Taststifte der Braille-Zeile 29 werden durch eine Matrix angewählt, die 12 x 40 Elemente besitzt. Die Zahl 12 ergibt sich aus der Anzahl der Stifte für ein Modul (sechs) und den Positionen "Setzen" und "Löschen" (zwei) für die Taststifte. Die Zahl 40 ist durch die Anzahl der verwendeten Module (vierzig) festgelegt.

Die Schaltungsanordnung für die Positionen "Setzen" und "Löschen" der Stifte ist am Ausgang 25 des Bausteines 17 aus Figur 3 angeschlossen. Diese Schaltungsanordnung weist einen Signalsetzweg mit dem elektronischen Baustein 30 und dem Setztreiber 31 sowie einen Signallöschweg mit den elektronischen Bausteinen 32 und 33 und dem Löschtreiber 34 auf. Beide Signalwege sind an die Braillezeile 29 geführt. Die Position der Taststifte wird durch ein 6-bit-Wort bestimmt, wobei logisch "I" dem "Setzen" und logisch "0" dem "Löschen" entspricht. Da es nicht möglich ist, die sechs Stifte eines Moduls gleichzeitig zu setzen oder zu löschen, werden jeweils nur drei Stifte zur gleichen Zeit angesteuert. Es sind dies entweder die Stifte 1, 5, 3 oder 4, 2, 6. Dieses und die Abschaltung des Moduls wird durch zwei Betriebs-Leitungen 35 und 36 realisiert, zu deren Ansteuerung zwei weitere Bits benötigt werden.

Der in Figur 5 dargestellte Pufferseitenspeicher weist zwei Optokopplerblöcke 37 und 38 auf, die an den Ein- bzw. Ausgang 22 bzw. 23 der Bausteine 20 bzw. 19 aus Figur 3 angeschlossen sind. Die Ausgänge des Optokopplerblocks 38 sind über einen integrierten Baustein 39 an einen Dekoder 40 angeschlossen, dem ein Multiplexer 41 mit nachgeordnetem Zwischenspeicher 42 nachgeschaltet ist. Der Multiplexer 41 weist drei integrierte Schaltkreise IC 13, 14 und 15 auf.

Dem Multiplexer 41 werden von dem Dekoder 2 aus den Figuren 1 und 2 weitere Signale zugeführt, die auch dem Bildwiederholspeicher 43 eingegeben werden. Der Pufferseitenspeicher weist weiterhin zwei elektronische Bauelemente 44 und 45 auf, von denen der Baustein 45 an die Eingänge des Optokopplerblocks 37 angeschlossen ist. Bauelement 44 dient zur Entkopplung des Bauelementes 42 vom Dekoder 2.

Die über die Anschlüsse $P_1$ und $P_2$ von dem Dekoder 2 direkt an den Pufferseitenspeicher 5 geführten Daten werden in dem Bildwiederholspeicher 43 (IC 19/20) und über den elektronischen Baustein 44 (IC 18) in dem Zwischenspeicher 42 (IC 16/17) gespeichert. Die als Bildwiederholspeicher dienenden IC 19 und IC 20 werden von dem Bildschirmtext-Dekoder 2 angesteuert. Die als Zwischenspeicher für das Bedienpult 6 dienenden IC 16 und 17 werden wie folgt ausgelesen:
Über den Optokopplerblock 38 (IC 1 bis IC 4), den Baustein 39 (IC 9) und den Dekoder (IC 11 und IC 12) werden die Adressen an den Zwischenspeicher 42 (IC 16 und IC 17) angelegt, nachdem der Multiplexer 41 (IC 13, IC 14 und IC 15) von einem Signal umgeschaltet worden ist. Dieses Signal kann über dem Optokopplerblock 38, beispielsweise von dem IC 1, bereitgestellt werden. Über den Baustein 45 (IC 10) und den Optokoppler 37 (IC 5 bis IC 8) werden die Daten an das Bedienpult 6 übergeben. Somit dient der Dekoder 40 (IC 11 und IC 12) zur Umrechnung und Abspeicherung der gemultiplexten Adressen.

Licentia Patent-Verwaltungs-GmbH          PTL-HH/Sl/mar
Theodor-Stern-Kai 1                        HH 81/09
D-6000 Frankfurt 70

PATENTANSPRÜCHE

1. Gerät zur Wiedergabe von Videotextseiten oder von Videotext- und Bildschirmtextseiten unter Verwendung eines einen
Videotext- bzw. Videotext-Bildschirmtext-Dekoder aufweisenden Empfangsbauteiles, insbesondere eines Fernsehgerätes,
wobei der Dekoder einen Seitenspeicher und einen dem Seitenspeicher nachgeschalteten Zeichengenerator aufweist, dadurch
gekennzeichnet, daß ein zum Seitenspeicher (3) logisch parallel geschalteter Pufferseitenspeicher (5) vorgesehen ist, und
daß der Pufferseitenspeicher mit einem von einem Blinden bedienbaren Bedienpult (6) zusammenwirkt, das eine Ansteuerschaltungsanordnung, eine Braille-Zeile zur zeilenweisen
Ausgabe der Textseiten und eine Bedienungstastatur zur Eingabe von Bedienungsfunktionen aufweist.

2. Gerät nach Anspruch 1, dadurch gekennzeichnet, daß der
Pufferseitenspeicher (5) von dem Seitenspeicher (3) abkoppelbar ist, daß nach einem Abkoppelvorgang der von dem Seitenspeicher (3) an den Pufferseitenspeicher (5) gelieferte
Textinhalt in den Seitenspeicher des Bedienpultes (6) aufgenommen wird, und daß der Pufferseitenspeicher (5) unmittelbar danach wieder parallel zum Seitenspeicher (3) angekoppelt
wird.

3. Gerät nach Anspruch 1 oder 2, gekennzeichnet durch eine galvanische Trennung von Pufferseitenspeicher (5) und Bedienpult (6).

4. Gerät nach Anspruch 1, dadurch gekennzeichnet, daß eine oder mehrere Braille-Zeilen vorgesehen sind.

5. Gerät nach Anspruch 1, 2 oder 3, dadurch gekennzeichnet, daß im Bedienpult (6) eine Tastatur angeordnet ist, die die freie Anwahl der Bildschirm- bzw. Videotextzeilen ermöglicht.

6. Gerät nach Anspruch 1, dadurch gekennzeichnet, daß bei dem Bildschirmtext-Videotext-Dekoder der Seitenspeicher entnommen und durch entsprechende Steckverbindungen, die die Verbindung zwischen Bildschirmtext-Videotext-Dekoder und Seitenspeicher, der sich nunmehr außerhalb des Dekoders befindet, herstellen, ersetzt wird.

7. Gerät nach Anspruch 1, 2, 3 oder 5, dadurch gekennzeichnet, daß im Bedienpult (6) ein weiterer Pufferspeicher angeordnet ist.

8. Gerät nach Anspruch 1, dadurch gekennzeichnet, daß eine automatische Ausgabe von Informationen zur Benutzerführung erfolgt.

9. Gerät nach Anspruch 1, dadurch gekennzeichnet, daß der Pufferseitenspeicher (5) in dem Gehäuse des Bedienpultes (6) angeordnet und über eine Steckverbindung mit dem Seitenspeicher (3) logisch parallel verbunden ist.

**0061676**

1/4

FIG.1

Bildschirm

FIG.2

FIG.3

PORT/
RAM
8156    14

9

PORT/
EPROM
8755    17

25

24

74LS
244    19

23

CPU
8085

21

Steuerbus

PORT/
EPROM
8755

18

74LS
244

22

15

Adress-und Datenbus

21a

20

1k×8 RAM/8156

16

0061676

# FIG.4

E₁

2/6 74 LS 04

36

30    31

74LS
367

6×
BB 679

6

40×6 Stifte

25   Daten

32

74LS
04

74LS
367

6×
BB 679

6

E

29

33   34

E₂

2/6 74LS 04

35

40×BD 680

28

74LS
04

5×7445
1×74LS 138

24   Adressen

6

27

26